# EUROPEAN PATENT APPLICATION

(11) **EP 3 617 955 A1**
(43) Date of publication of application: **04.03.2020**
(21) Application number: 19192194.9
(22) Date of filing: 19.08.2019
(51) Int. Cl.: G06N 3/04, G10L 15/00, G10L 15/26, G10L 15/32, G06N 20/00

(54) **METHOD AND SYSTEM FOR OPTIMALLY PROVIDING OUTPUT FOR INPUT**

(30) Priority: 27.08.2018 US 201816113056
(71) Applicant: VoiceCTRL Oy, 01530 Vantaa (FI)
(72) Inventor: Leminen, Jari, 04300 Tuusula (FI); Lähdeoja, Jukka, 01200 Vantaa (FI); Heilakka, Erkki, 00140 Helsinki (FI); Nyrövaara, Jan-Erik, 02200 Espoo (FI)
(74) Representative: Suominen, Kaisa Liisa

(57) **Abstract**

Disclosed is a method of optimally providing output for an input, the method comprising: receiving the input; providing the input to a first computing module (206), wherein the first computing module is operable to process the input and provide a first score; providing the input to a second computing module (208), wherein the second computing module is operable to process the input and provide a second score; and analysing the first score and the second score to determine at least one of the first and second computing module to be used for providing the output for the input.

## Description

### TECHNICAL FIELD

The present disclosure relates generally to artificial intelligence systems; and more specifically, to methods of optimally providing output for an input. Furthermore, the present disclosure also relates to systems for optimally providing output for an input.

### BACKGROUND

In recent times, lifestyle of people has changed drastically resulting into a busier, faster and dynamic day to day schedules. Such lifestyle of people has made them dependent on others for getting their work done. Typically, a person used to seek help from people who provide services and products to them. In past few decades, people providing services and products have been replaced by machines, software tools and a combination of machines and software tools. Additionally, such software tools and the combination of machines and software tools are artificially intelligent. Moreover, the artificially intelligent software tools and the combination of machines and software tools form artificial intelligence systems.

The currently used artificial intelligence systems are trained with training data (such as text, voice, images and the like) to understand text and speech of a user thereof. The artificial intelligence systems work better with a bulk of analysable data set, like speech, text and images. Nowadays, most of the data set provided to the artificial intelligence systems are in form of speech. The artificial intelligence systems perform speech-to-text conversion of the data set provided thereto in form of speech. The artificial intelligence systems are trained to identify a language and a context associated with the data set provided thereto in form of speech. The artificial intelligence systems are trained with a specific script in order to understand a language or dialect based on the script.

However, the currently used artificial intelligence systems suffer from multiple performance issues. The currently used artificial intelligence systems are trained to understand a specific language and do not work well for others. Therefore, choosing different artificial intelligence systems for speech-to-text conversion for speech in different languages and dialect may be very inconvenient. Furthermore, the currently used artificial intelligence systems may provide a poor performance in speech-to-text conversion of speech comprising words from different languages and different complexity and a varying noise intensity. Moreover, the existing artificial intelligence systems are not versatile.

Therefore, in light of the foregoing discussion, there exists a need to overcome the aforementioned drawbacks associated with the currently used artificial intelligence system.

### SUMMARY

The present disclosure seeks to provide a method of optimally providing output for an input. The present disclosure also seeks to provide a system for optimally providing output for an input. The present disclosure seeks to provide a solution to the existing problem of inefficient approach for providing an optimal output for a given input. An aim of the present disclosure is to provide a solution that overcomes at least partially the problems encountered in prior art, and provides a reliable, efficient and versatile method for providing output for an input.

In one aspect, an embodiment of the present disclosure provides a method of optimally providing output for an input, the method comprising:
- receiving the input;
- providing the input to a first computing module, wherein the first computing module is operable to process the input and provide a first score;
- providing the input to a second computing module, wherein the second computing module is operable to process the input and provide a second score; and
- analysing the first score and the second score to determine at least one of the first and second computing module to be used for providing the output for the input.

In another aspect, an embodiment of the present disclosure provides a system for optimally providing output for an input, the system comprising:
- a first computing module;
- a second computing module;
- an orchestration module communicably coupled to the first computing module and the second computing module, the orchestration module being operable to:
   - receive the input;
   - provide the input to a first computing module, wherein the first computing module is operable to process the input and provide a first score;
   - provide the input to a second computing module, wherein the second computing module is operable to process the input and provide a second score; and
   - analyse the first score and the second score to determine at least one of the first and second computing module to be used for providing the output for the input.

In yet another aspect, an embodiment of the present disclosure provides a computer program product for optimally providing output for an input, the computer program product comprising a non-transitory machine-readable data storage medium having stored thereon program instructions that, when accessed by a processing device, cause the processing device to:
- receive the input;
- provide the input to a first computing module, wherein the first computing module is operable to process the input and provide a first score;
- provide the input to a second computing module, wherein the second computing module is operable to process the input and provide a second score; and
- analyse the first score and the second score to determine at least one of the first and second computing module to be used for providing the output for the input.

Embodiments of the present disclosure substantially eliminate or at least partially address the aforementioned problems in the prior art, and enable efficient and versatile method for optimally providing output for an input.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 is an illustration of steps of a method of optimally providing output for an input, in accordance with an embodiment of the present disclosure; and
FIG. 2 is a schematic illustration of a network environment in which a system for optimally providing output for an input is implemented, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, an embodiment of the present disclosure provides a method of optimally providing output for an input, the method comprising:
- receiving the input;
- providing the input to a first computing module, wherein the first computing module is operable to process the input and provide a first score;
- providing the input to a second computing module, wherein the second computing module is operable to process the input and provide a second score; and
- analysing the first score and the second score to determine at least one of the first and second computing module to be used for providing the output for the input.

In another aspect, an embodiment of the present disclosure provides a provides a system for optimally providing output for an input, the system comprising:
- a first computing module;
- a second computing module;
- an orchestration module communicably coupled to the first computing module and the second computing module, the orchestration module being operable to:
   - receive the input;
   - provide the input to a first computing module, wherein the first computing module is operable to process the input and provide a first score;
   - provide the input to a second computing module, wherein the second computing module is operable to process the input and provide a second score; and
   - analyse the first score and the second score to determine at least one of the first and second computing module to be used for providing the output for the input.

The present disclosure provides a method and system that provides an improved and efficient performance for providing output for an input. Furthermore, the orchestration module disclosed herein directs the input to a suitable computing module for providing the output. The directing of the input to the suitable computing module reduces a time and effort required for providing the output. Also, the present disclosure provides a modular approach for providing the output for the input. The present system is also implementable on existing hardware components. Additionally, the system disclosed herein is robust. The system and the method are operable to work on a wide range of scripts, languages and dialects. Also, present disclosure provides a computer program product that provides an optimal result and can be transferred from one platform to another.

It will be appreciated that the aforesaid method and the aforesaid system are not limited to optimally providing output for an input for only a single use case, and can be employed to optimally provide output for an input for a plurality of use cases (namely, multiple use cases). In such a case, the aforesaid steps are implemented for each use case of the plurality of use cases.

Throughout the present disclosure, the term *"orchestration module"* refers to a module comprising programmable components implemented on a computing device. The orchestration module is operable to receive an input and subsequently, process the input to determine an optimal means of providing the output for the input. Specifically, the orchestration module is communicably coupled to a plurality of computing modules. Notably, each of the plurality of computing modules is operable to execute a task specific to the computing module. Therefore, the orchestration module is operable to select the modules to be used for optimally providing the output for the input. The orchestration module is communicably coupled to the first computing module and the second computing module.

In an embodiment, the orchestration module is implemented on a computing device. The computing device receives the input and provides it to the orchestration module. The term *"computing device"* relates to an electronic device operable to execute programs and carry out arithmetic and logical operations. Notably, the computing device is operable to facilitate voice and/or data communication over a communication network. Furthermore, the computing device includes a casing, a memory, a processing unit, a network interface card, a microphone, a speaker, a keypad, and a display. Examples of computing devices include, but are not limited to, cellular phones, personal digital assistants (PDAs), handheld devices, laptop computers, personal computers, etc. In an example, the orchestration module is implemented on the computing device by way of programmable hardware components. In another example, the orchestration module is implemented by way of an application programming interface executed using the processing unit of the computing device.

The method of optimally providing output for the input comprises receiving the input. The orchestration module is operable to receive the input. Specifically, the input is processed to determine an output. The input is provided as an audio input or in a text format. Moreover, various tasks may be performed on the input to determine the output.

Optionally, the input is provided by a user. The user provides the input in a text format or as an audio input. Furthermore, the input is processed to provide the output to the user. In an example, the user may provide the audio input by way of an audio or a video call. In another example, the user may provide an audio recording as an input. Additionally, the user may provide the input to the computing device, wherein the computing device communicates the input to orchestration module. Throughout the present disclosure, the term *"computing module"* relates to a module comprising programmable components implemented on the computing device. Specifically, the computing module may be a hardware, software, firmware or a combination thereof. The computing module is implemented by way of a single processor or a plurality of processors connected to each other in any architecture such as serial, parallel, client-server and so forth. The computing module is operable to receive an input, process the input and provide the output. Specifically, the computing module is operable to process the input based on programming of the computing module. More specifically, a given computing module is programmed to perform a specific task. Consequently, the given computing module processes the input based on programming thereof and provides a corresponding output. In an example, a computing module may be programmed to receive an input in an audio format and process the input to convert the audio input into text format and provide text as the output. In another example, a computing module may be programmed to receive an input in a text format and process the input to determine language of the text as the output. Moreover, the computing module may comprise a plurality of sub modules, wherein each of the plurality of sub-modules may be operable to perform a specific task for providing the output. Additionally, the computing module is operable to process the input to determine the output and provide a score therewith.

Optionally, a score provided by a given computing module for a given output is indicative of at least one of: time required to provide the given output, cost associated with providing the given output, processing requirements of the given computing module, probability of accuracy of the given output. Specifically, the given computing module is operable to process a given input and provide a score for the given output. Moreover, the score provided by the given computing module represents a confidence score of the given computing module for the given input. Optionally, time required to provide the given output relates to time required by the given computing module to process the given input. Specifically, time required to process the given input is relative of complexity of the given input and complexity of tasks performed by the given computing module. In an example, a computing module performing a task of speech-to-text conversion may require lesser time to process a given audio input in comparison with another computing module performing language identification of the audio input. Furthermore, a higher time required to provide the given output may negatively affect the score for the given output.

Optionally, cost associated with providing the given output relates to monetary resources required for processing of the given input by the given computing module. Specifically, employing the given computing module may have a cost associated therewith. In an example, the given computing module may be licensed by a third-party organization. Furthermore, a higher cost associated with providing the given output may negatively affect the score for the given output.

Optionally, processing requirements of the given computing module relates to operational requirements of the given computing module. Specifically, for operation of the given computing module, resources of the computing device used for implementing the given computing module are utilized. Furthermore, higher processing requirements of the given computing module may negatively affect the score for the given output.

Optionally, probability of accuracy of the given output relates to a confidence estimation of the accuracy of the output provided by the given computing module with respect to the given input. In an example, an audio input is provided to two discrete computing modules, wherein one of the two discrete computing modules is operable to perform speech-to-text conversion and another is operable to perform determination of language used in audio input. In such example, the audio input may be of a short duration. Therefore, the computing module operable to perform speech-to-text conversion may provide output text for the audio input with a high probability of accuracy of the output. However, the computing module operable to perform determination of language used in audio input may provide the language output with a low probability of accuracy of the output. Furthermore, higher probability of accuracy of the given output may positively affect the score for the given output.

In an embodiment, the computing module is operable to perform parsing of the input for determining syntactic, contextual and conceptual meaning thereof. In an example, the computing module is operable to perform an acoustic and/or linguistic analysis of the input provided thereto. In another example, the computing module is operable to identify context, script, language, dialect and a meaning associated with the input. In yet another example, the computing module is operable to understand the context of the input, determine a corresponding answer for the input, provide the corresponding answer in an audio format. Optionally, the computing module is implemented by way of an application programming interface on the computing device.

Optionally, the computing module may comprise a plurality of sub-modules, wherein the plurality of sub-modules operate in a hierarchical manner. In an example, a computing module may comprise a first sub-module for speech-to-text conversion of an audio input, a second sub-module for understanding context of the input and a third sub-module for generating response for the input, operating in a hierarchical manner. Specifically, the first sub-module is operable to convert speech-to-text in the input and provide the text output to the second sub-module. Subsequently, the second module is operable to understand context of the text output from the first sub-module and provide the context to the third sub-module. Consequently, the third module is operable to generate a response based on the context provided by the second sub-module.

The method of optimally providing the input to the first computing module, wherein the first computing module is operable to process the input and provide the first score. The orchestration module is operable to provide the input to the first computing module. Specifically, the first computing module is operable to perform a specific task on the input provided thereto to provide the output. Therefore, the output provided by the first computing module is specific to the first computing module. Furthermore, the first score provided by the first computing module is specific to the input provided thereto and the output provided thereby. In an example, the first computing module may be operable to perform speech-to-text conversion in the input and provide text as an output, wherein the input provided to the first computing module may be in an audio format. Additionally, the text provided as the output has a first score associated therewith.

The method of optimally providing the input to the second computing module, wherein the second computing module is operable to process the input and provide the second score. The orchestration module is operable to provide the input to the second computing module. Specifically, the second computing module is operable to perform a specific task on the input provided thereto to provide the output. Therefore, the output provided by the second computing module is specific to the second computing module. Furthermore, the second score provided by the second computing module is specific to the input provided thereto and the output provided thereby. In an example, the second computing module may be operable to determine a language used in the input and provide the determined language as an output, wherein the input provided to the second computing module is in an audio or text format. Additionally, the determined language provided as the output has the second score associated therewith.

Optionally, the first computing module is a cognitive computing module. The cognitive computing module allows for simulating human thought process in a computerized model. Furthermore, the cognitive computing module uses data mining techniques, pattern recognition and natural language processing for imitating human decision-making capability. The cognitive computing module allows for solving problems without requiring human assistance. The cognitive module uses one or more machine learning techniques for improving performance thereof based on a feedback provided thereto.

Optionally, the second computing module is a machine learning module. The machine learning module allows for improvement in performance of the second computing module without making any explicit changes thereto. The machine learning module is configured to learn from a dataset associated with a previous task. Furthermore, the machine learning module learns based on any one of: a supervised machine learning technique, an unsupervised machine learning technique, a semi-supervised machine learning technique, a reinforcement machine learning technique. Additionally, the machine learning module based on supervised machine learning technique uses data available from previous tasks to learn and improve a performance associated with the machine learning module. Furthermore, the machine learning module based on unsupervised machine learning technique uses an unlabelled dataset for learning thereof. The machine learning module based on semi-supervised machine learning technique use labelled as well as unlabelled data for training thereof. Moreover, the machine learning module based on reinforcement machine learning technique interacts with an environment by producing actions and discovering errors and subsequently improving based on the discovered errors.

It will be appreciated that the first computing module and the second computing module comprise a substantial difference in operations thereof. In a first exemplary implementation, the first computing module is operable to provide a different output in comparison with output provided by the second computing module. Specifically, a task performed by the first computing module is different from a task performed by the second computing module. For example, the first computing module may perform speech-to-text conversion of an input to provide a text output. In such example, the second computing module may perform a linguistic analysis of the input to provide language of the input as the output. Therefore, there is a substantial difference in the outputs provided by the first computing module and the second computing module.

In a second exemplary implementation, the first computing module and the second module are operable to perform a task to provide a similar output. However, there is a difference in a method employed by the first computing module, for implementation of the task, in comparison with a method employed by the second computing module. For example, the first computing module and the second computing module may be operable to perform speech-to-text to provide a text output, for an input in audio format. However, the method employed by the first computing module, for implementation of speech-to-text conversion, may be a dynamic time warping based speech recognition. The method employed by the second computing module for implementation of speech-to-text conversion may be end-to-end automatic speech recognition. Furthermore, it will be appreciated that there may exist a difference between quality of text outputs provided by the first and second computing modules since they employ different methods for implementing speech-to-text conversion. Therefore, there is a substantial difference in operation of the first computing module and the second computing module.

In a third exemplary implementation, the first computing module and the second computing module are operable to perform a similar task for processing of the input. However, the output provided by the first computing module is superior in comparison with the output provided by the second computing module, since the first computing module has a higher cost and higher processing requirement associated therewith. For example, the first computing module and the second computing module are operable to perform text-to-speech conversion. However, the output provided by the first computing module has a higher probability of accuracy in comparison with output provided by the second computing module. Therefore, there is a substantial difference in the outputs provided by the first computing module and the second computing module.

In a fourth exemplary implementation, the first computing module and the second computing module are operable to perform a similar task for processing of the input. However, the first computing module has a higher proficiency in providing an output for a given type of input, in comparison with the second computing module. Similarly, the second computing module has a higher proficiency in providing an output for another given type of input in comparison with the first computing module. For example, the first computing module and the second computing module are operable to perform linguistic analysis of an input. In such example, the first computing module may have a higher proficiency in performing the linguistic analysis of input in English language. Similarly, the second computing module may have a higher proficiency in performing the linguistic analysis of input in Finnish language. Therefore, there is a substantial difference in operation of the first computing module and the second computing module.

The method of optimally providing the output for the input comprises analyzing the first score and the second score to determine at least one of the first and second computing module to be used for providing the output for the input. The orchestration module is operable to analyse the first score and the second score to determine at least one of the first computing module and the second computing module to be used for providing the output for the input. Specifically, the orchestration module is operable to determine at least one of the first computing module and the second computing module based on the first score and the second score. Notably, the first score provided by the first computing module and the second score provided by the second computing module provide an estimation of the computing module suitable for providing the output for the input. Furthermore, the orchestration module is operable to select the determined at least one of the first and second computing module, for providing the output for the input.

Optionally, the orchestration module is operable to determine at least one of the first and second computing module to be used for providing the output based on the first and second score, wherein the first and second score are indicative of probability of accuracy of output provided by the first computing module and second computing module respectively. Specifically, the orchestration module determines at least one of the first and second computing module with higher probability of accuracy of output, to be used for providing the output.

Optionally, the orchestration module is operable to determine at least one of the first and second computing module to be used for providing the output based on the first and second score, wherein the first and second score are indicative of processing requirements of the first computing module and second computing module respectively. Specifically, the orchestration module determines at least one of the first computing module and the second computing module with lower processing requirements, to be used for providing the output. Optionally, the orchestration module is operable to determine a computing module to be used for providing the output, wherein the computing module has probability of accuracy of output higher than a first threshold, and cost associated with providing the output lower than a second threshold.

Optionally, at least one of the first and second computing module to be used for providing the output is determined further based on at least one parameter associated with the input. Specifically, at least one parameter associated with the input relates to at least one of: duration of the input, a priority order associated with the input.

Optionally, duration of the input relates to a length of the received input. Specifically, the input is in an audio format or a text format. In a first example, the input may be an audio input of a short duration. In such example, the first computing module is operable to perform speech-to-text conversion and the second computing module is operable to perform linguistic analysis. Therefore, for an input of short duration, a linguistic analysis may not be effectively performed. However, speech-to-text conversion of the audio input may be performed effectively. Therefore, the first computing module may be determined to provide output for the audio input of short duration.

Optionally, the input may have the priority order associated therewith. Specifically, the priority order associated with the input relates to a time allotted for providing the output. Notably, a high priority order associated with the input relates to a higher urgency of the output and thus, a time allotted for providing the output may be low. Therefore, at least one the first and second computing module with a lower time required for providing the output may be determined to be used for providing the output.

In an embodiment, the input may comprise a request for executing a specific action. Therefore, at least one of the first and second computing module operable to execute the specific action may be determined to be used for providing the output. In an example, the input may be *"Please provide the weather details for today"* in an audio format. In such example, the first computing module may comprise sub-modules operable to perform speech-to-text conversion and linguistic analysis of the input. Furthermore, the second computing module may be a machine learning module comprising sub-modules operable to perform speech-to-text conversion, linguistic analysis, context understanding and response generation for the input. Therefore, in such example, based on the first and second score provided by the first and second computing module respectively, the orchestration module may determine the second computing module to be used for providing the text since the second computing module is adept at performing the specific action requested in the input.

Optionally, the method comprises pre-processing the input to select the first computing module and the second computing module from a plurality of computing modules. The orchestration module is operable to pre-process the input to select the first computing module and the second computing module from a plurality of computing modules. Specifically, the orchestration module pre-processes the input to determine a context thereof, wherein computing modules suitable for processing the input are selected from amongst the plurality of computing modules based on the context of the input. More specifically, each of the plurality of computing modules is operable to perform a specific task. Therefore, the computing modules that perform specific tasks related to the context of the input are selected to be suitable for processing the input. It is to be understood that the present disclosure is not limited to a use of first and second computing modules for processing of the input. Therefore, the orchestration module may select a third computing module, fourth computing module and so forth from the plurality of computing modules, for processing of the input.

Optionally, the context of the input relates to at least one of: geolocation of origin of the input, format of the input, noise in the input. Notably, the input is provided by a user, wherein geolocation of origin of the input relates to geolocation of the user. Therefore, geolocation of origin of the input is indicative of language and dialect used by the user in input. Therefore, computing modules, proficient in processing the language and dialect used by the user in input, may be selected from amongst the plurality of computing modules for providing the output. In an example, the input received may comprise a high magnitude of noise (namely, unwanted components) therein. Therefore, computing modules, proficient in providing an accurate output for input with high magnitude of noise, may be selected.

Optionally, the method comprises receiving a feedback related to the output, wherein at least one of the first score and the second score is adjusted based on the feedback. The orchestration module is operable to receive the feedback related to the output. Specifically, the feedback is employed to train the orchestration module. Furthermore, the feedback may be a positive or a negative response. In an example, prior to receiving the feedback, the orchestration module may have determined the first computing module to be used for providing the output. However, the orchestration module may receive the negative response as a feedback. Therefore, the orchestration module may lower the first score of the computing module based on the feedback.

Optionally, the feedback may be provided by the user providing the input. Specifically, the user may provide the positive response as the feedback, when the user receives a desired output to the provided input. Similarly, the user may provide the negative response as the feedback, when the user does not receive the desired output to the provided input. Optionally, the input may comprise a request for executing the specific action. Therefore, the orchestration module may receive the positive response as the feedback upon successful execution of the specific action. Optionally, the feedback may be provided by a third-party entity executing the action.

In an exemplary implementation of the present disclosure, the orchestration module is communicably coupled to a first computing module, a second computing module and a third computing module. Specifically, the first computing module is operable to convert speech-to-text. The second computing module is operable to perform linguistic analysis of the input. The third computing module is operable to understand context of the input and generate a response for the input. Furthermore, the orchestration module is operable to receive audio input from a user and provide a response (namely, output) for the input. In a first instance, the audio input from the user may be *"Hi".* In such example, the first module may convert the speech-to-text and provide a high first score. However, the second computing module may not be able to perform linguistic analysis due to short duration of the input and may provide a low second score. The third computing module may generate a response "Hi" and provide a high third score. Therefore, the orchestration module may determine the first and third computing module to be used for providing the output for the audio input. In the first instance, the orchestration module may provide the output *"Hi"* for the provided input. In a second instance, the audio input from the user may be *"I would like to have a taxi to railway station".* In such example, the first module may convert the speech-to-text and provide a high first score. Also, the second computing module performs linguistic analysis and determines the language as English. The third computing module may generate a response *"Sure. The taxi will be provided."* and provide a high third score. Therefore, the orchestration module may determine the first, second and third computing module to be used for providing the output for the audio input. Furthermore, the orchestration module may provide the information from the user to a taxi reservation service. Furthermore, there is disclosed a computer program product for optimally providing output for an input. The computer program product comprises a non-transitory machine-readable data storage medium having stored thereon program instructions that, when accessed by a processing device, cause the processing device to receive the input; provide the input to a first computing module, wherein the first computing module is operable to process the input and provide a first score; provide the input to a second computing module, wherein the second computing module is operable to process the input and provide a second score; and analyse the first score and the second score to determine at least one of the first and second computing module to be used for providing the output for the input.

### DETAILED DESCRIPTION OF THE DRAWINGS

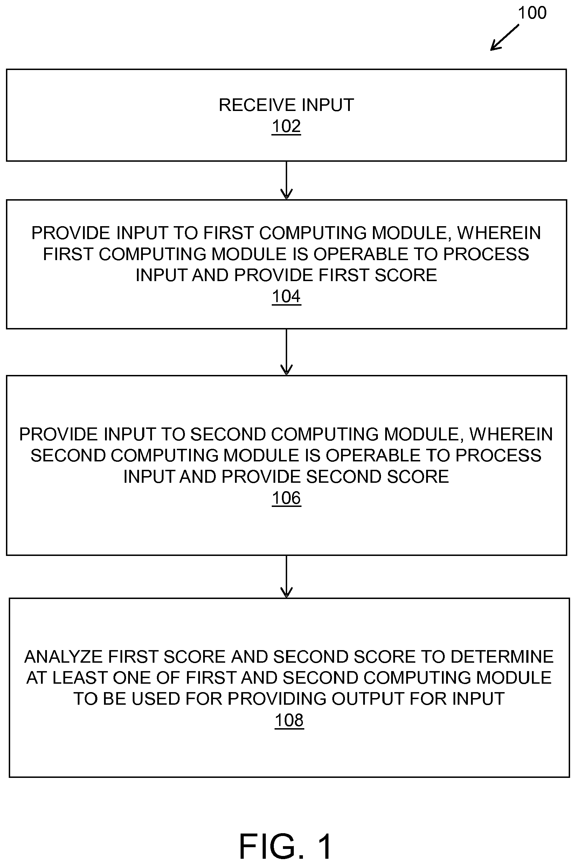

Referring to FIG. 1, illustrated are steps of a method **100** of optimally providing output for an input, in accordance with an embodiment of the present disclosure. At step **102**, the input is received. At step **104**, the input is provided to a first computing module. The first computing module is operable to process the input and provide a first score. At step **106**, the input is provided to a second computing module. The second computing module is operable to process the input and provide a second score. At step **108**, the first score and the second score are analysed to determine at least one of the first and second computing module to be used for providing the output for the input.

The steps **102** to **108** are only illustrative and other alternatives can also be provided where one or more steps are added, one or more steps are removed, or one or more steps are provided in a different sequence without departing from the scope of the claims herein.

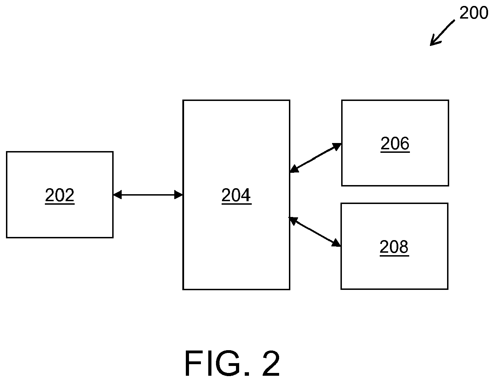

Referring to FIG. 2, illustrated is a schematic illustration of a network environment **200** in which a system for optimally providing output for an input is implemented, in accordance with an embodiment of the present disclosure. The network environment **200** comprises a computing device **202** associated with a user, an orchestration module **204**, a first computing module **206** and a second computing module **208**. The computing device **202** is communicably coupled with the orchestration module **204**. Furthermore, the orchestration module **204** is communicably coupled to the first computing module **206** and the second computing module **208**. In an instance, the orchestration module **204**, the first computing module **206** and the second computing module **208**, may be implemented on a single computing device. In another instance, the orchestration module **204** and any one of the first computing module **206** and the second computing module **208** may be implemented on a single computing device. In yet another instance, the orchestration module **204**, the first computing module **206** and the second computing module **208** may be implemented on different computing devices. It will be appreciated that implementation of the orchestration module **204**, the first computing module **206** and the second computing module **208** on same or different computing devices does not limit the scope of the invention disclosed herein.

FIG. 2 is merely an example, which should not unduly limit the scope of the claims herein. It is to be understood that the specific designation for the network environment **200** is provided as an example and is not to be construed as limiting the network environment **200** to specific numbers, types, or arrangements of computing modules. A person skilled in the art will recognize many variations, alternatives, and modifications of embodiments of the present disclosure.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method of optimally providing output for an input, the method comprising:
- receiving the input;
- providing the input to a first computing module (206), wherein the first computing module is operable to process the input and provide a first score;
- providing the input to a second computing module (208), wherein the second computing module is operable to process the input and provide a second score; and
- analysing the first score and the second score to determine at least one of the first and second computing module to be used for providing the output for the input.

2. A method according to claim 1, wherein at least one of the first computing module (206) and second computing module (208) to be used for providing the output is determined further based on at least one parameter associated with the input.

3. A method according to claim 1 or 2, wherein the method comprises receiving a feedback related to the output, wherein the first score and the second score are adjusted based on the feedback.

4. A method according to any of the preceding claims, wherein a score provided by a given computing module for a given output is indicative of at least one of time required to provide the given output, cost associated with providing the given output, processing requirements of the given computing module, probability of accuracy of the given output.

5. A method according to any of the preceding claims, wherein the method comprises pre-processing the input to select the first computing module (206) and the second computing module (208) from a plurality of computing modules.

6. A method according to any of the preceding claims, wherein the first computing module (206) is a cognitive computing module.

7. A method according to any of the preceding claims, wherein the second computing module (208) is a machine learning module.

8. A system for optimally providing output for an input, the system comprising:
- a first computing module (206);
- a second computing module (208);
- an orchestration module (204) communicably coupled to the first computing module and the second computing module, the orchestration module being operable to:
- receive the input;
- provide the input to a first computing module, wherein the first computing module is operable to process the input and provide a first score;
- provide the input to a second computing module, wherein the second computing module is operable to process the input and provide a second score; and
- analyse the first score and the second score to determine at least one of the first and second computing module to be used for providing the output for the input.

9. A system according to claim 8, wherein at least one of the first computing module (206) and second computing module (208) to be used for providing the output is determined further based on at least one parameter associated with the input.

10. A system according to claim 8 or 9, wherein the orchestration module (204) is operable to receive a feedback related to the output, wherein the first score and the second score are adjusted based on the feedback.

11. A system according to any of the claims 8 - 10, wherein a given score provided by a given computing module is indicative of at least one of time required to provide the output, cost associated with providing the output, processing requirements of the given computing module, probability of an accurate output for the input.

12. A system according to any of the claims 8 - 11, wherein the orchestration module (204) is operable to pre-process the input to select the first computing module (206) and the second computing module (208) from a plurality of computing modules.

13. A system according to any of the claims 8 - 12, wherein the first computing module (206) is a cognitive computing module.

14. A system according to any of the claims 8 - 13, wherein the second computing module (208) is a machine learning module.

15. A computer program product for optimally providing output for an input, the computer program product comprising a non-transitory machine-readable data storage medium having stored thereon program instructions that, when accessed by a processing device, cause the processing device to:
- receive the input;
- provide the input to a first computing module (206), wherein the first computing module is operable to process the input and provide a first score;
- provide the input to a second computing module (208), wherein the second computing module is operable to process the input and provide a second score; and
- analyse the first score and the second score to determine at least one of the first and second computing module to be used for providing the output for the input.
